# EUROPEAN PATENT APPLICATION

(11) **EP 4 336 820 A1**
(43) Date of publication of application: **13.03.2024**
(21) Application number: 22814963.9
(22) Date of filing: 07.05.2022
(51) Int. Cl.: H04N 5/232, H04N 5/262

(54) **METHOD AND APPARATUS FOR GENERATING SPECIAL EFFECT CONFIGURATION FILE, DEVICE AND MEDIUM**

(30) Priority: 03.06.2021 CN 202110621032
(71) Applicant: Beijing Zitiao Network Technology Co., Ltd., Beijing 100190 (CN)
(72) Inventor: HAN, Xuyue, Beijing 100086 (CN)
(74) Representative: Dentons UK and Middle East LLP
(86) International application number: PCT/CN2022/091385
(87) International publication number: WO 2022/252916

(57) **Abstract**

Embodiments of the present disclosure relate to a method and apparatus for generating an effect configuration file, a device, and a medium. The method comprises: in response to an editing trigger operation for background music, displaying a track list in an editing interface for background music, wherein the track list comprises a first track of background music and a second track of music-related material; in response to an editing operation on the first track in the editing interface for background music, adjusting a playback time period of the background music, and/or, in response to an editing operation on the second track in the editing interface for background music, adjusting an associated time period corresponding to the music-related material in the background music; and in response to an instruction for generating an effect configuration file, according to the first track and the second track, generating an effect configuration file comprising the background music and the music-related material. In the present disclosure, an editable track is introduced to reduce the cost of understanding, shorten the production time, and improve the production effect of the effect configuration file comprising the background music.

## Description

### CROSS-REFERENCE TO RELATED APPLICATIONS

The present application is based on and claims priority to China Patent Application No. 202110621032.3 filed on June 3, 2021, the disclosure of which is incorporated by reference herein in its entirety.

### TECHNICAL FIELD

The present disclosure relates to the field of computer technology, in particular to a method for generating a sound effect configuration file, an apparatus, a device and a medium.

### BACKGROUND

With the continuous development of internet technology and intelligent terminal technology, the interaction between a user and an intelligent terminal can be enhanced by adding background music to enhance emotional expression, and infectiousness.

### SUMMARY

An embodiment of the present disclosure provides a method for generating an effect configuration file, comprising: displaying a track list in an editing interface for background music in response to an editing trigger operation on the background music, wherein the track list comprises a first track of the background music and a second track of a music-associated material; adjusting a playback time period of the background music in response to an editing operation on the first track in the editing interface for the background music, and/or adjusting an associated time period corresponding to the music-associated material in the background music in response to an editing operation on the second track in the editing interface for the background music; and generating the effect configuration file according to the first track and the second track in response to a generation instruction for the effect configuration file, wherein the effect configuration file comprises the background music and the music-associated material, the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

An embodiment of the present disclosure provides an apparatus for generating an effect configuration file, comprising: an editing trigger module configured to display a track list in an editing interface for background music in response to an editing trigger operation on the background music, wherein the track list comprises a first track of the background music and a second track of a music-associated material; an editing module configured to adjust a playback time period of the background music in response to an editing operation on the first track in the editing interface for the background music, and/or adjust an associated time period corresponding to the music-associated material in the background music in response to an editing operation on the second track in the editing interface for the background music; and a file generation module configured to generate the effect configuration file according to the first track and the second track in response to a generation instruction for the effect configuration file, wherein the effect configuration file comprises the background music and the music-associated material, the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

An embodiment of the present disclosure provides an electronic device, comprising: a processor; a memory configured store executable instructions for the processor; wherein the processor is configured to read the executable instructions from the memory and execute the executable instructions to implement the method for generating the effect configuration file provided in the embodiments of the present disclosure.

An embodiment of the present disclosure further discloses a computer-readable storage medium on which a computer program is stored, wherein the computer program is configured to perform the method for generating the effect configuration file provided in the embodiments of the present disclosure.

An embodiment of the present disclosure further provides a computer program, comprising: instructions that, when executed by a processor, cause the processor to perform the method for generating the effect configuration file provided in the embodiments of the present disclosure.

An embodiment of the present disclosure further provides a computer product comprising instructions that, when executed by a processor, cause the processor to perform the method for generating the effect configuration file provided in the embodiments of the present disclosure.

### BRIEF DESCRIPTION OF THE DRAWINGS

The above and other features, advantages, and aspects of the embodiments of the present disclosure will become more apparent from the following embodiments with reference to the drawings. Throughout the drawings, the same or similar reference signs indicate the same or similar elements. It should be understood that the drawings are schematic and the components and elements are not necessarily drawn to scale.
FIG. 1 is a flowchart of a method for generating an effect configuration file provided by an embodiment of the present disclosure;
FIG. 2 is a flowchart of another method for generating an effect configuration file provided by an embodiment of the present disclosure;
FIG. 3 is a schematic diagram of a first editing interface provided by an embodiment of the present disclosure;
FIG. 4 is a schematic diagram of a second editing interface provided by an embodiment of the present disclosure;
FIG. 5 is a schematic diagram of a third editing interface provided by an embodiment of the present disclosure;
FIG. 6 is a schematic diagram of a fourth editing interface provided by an embodiment of the present disclosure;
FIG. 7 is a schematic diagram of a fifth editing interface provided by an embodiment of the present disclosure;
FIG. 8 is a schematic structural diagram of an apparatus for generating an effect configuration file provided in an embodiment of the present disclosure;
FIG. 9 is a schematic structural diagram of an electronic device provided in an embodiment of the present disclosure.

### DETAILED DESCRIPTION

Exemplary embodiments of the present disclosure will now be described in detail with reference to the accompanying drawings. Although some embodiments of the present disclosure are shown in the accompanying drawings, it should be understood that the present disclosure can be implemented in various forms, and should not be construed as being limited to the embodiments set forth herein. On the contrary, these embodiments are provided for a more thorough and complete understanding of the present disclosure. It should be understood that the drawings and embodiments of the present disclosure are only used for exemplary purposes, and are not used to limit the scope of protection of the present disclosure.

It should be understood that the various steps described in the methods of the embodiments of the present disclosure may be executed in a different order, and/or executed in parallel. In addition, the methods may comprise additional steps and/or some of the illustrated steps may be omitted. The scope of the present disclosure is not limited in this regard.

The term "comprising" and its variants as used herein is an open-ended mode expression, that is, "comprising but not limited to". The term "based on" means "based at least in part on". The term "one embodiment" means "at least one embodiment"; the term "another embodiment" means "at least one additional embodiment"; and the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order of functions performed by these devices, modules or units, or interdependence therebetween.

It should be noted that the modifications of "a" and "a plurality of" mentioned in the present disclosure are illustrative and not restrictive, and those skilled in the art should understand that unless clearly indicated in the context, they should be understood as "one or more".

The names of messages or information exchanged between multiple devices in the embodiments of the present disclosure are only used for illustrative purposes, and are not used to limit the scope of these messages or information.

The inventor of the present disclosure found that in related art, the generation of an effect configuration file corresponding to the addition of background music is relatively complex, takes a longer time and is less efficient.

In view of this, an embodiment of the present disclosure provides a method for generating an effect configuration file to reduce the production time.

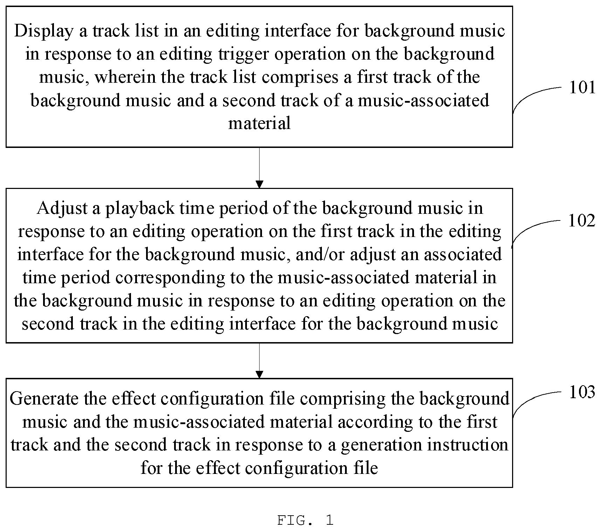

FIG. 1 is a flowchart of a method for generating an effect configuration file provided by an embodiment of the present disclosure. The method can be executed by an apparatus for generating an effect configuration file, wherein the apparatus can be implemented by software and/or hardware, and can generally be integrated in an electronic device. As shown in FIG. 1, this method comprises steps 101 to 103.

In step 101, a track list is displayed in an editing interface for background music in response to an editing trigger operation on the background music, wherein the track list comprises a first track of the background music and a second track of a music-associated material.

The method for generating an effect configuration file in an embodiment of the present disclosure can be implemented by a production tool for an effect configuration file in a terminal, the production tool being configured to implement editing, adjusting, and generating , etc., of the effect configuration file. The effect configuration file is a configuration file used to implement an effect function, for example, to achieve various interactions between a user and a terminal. The effect configuration file can be configured in the form of a plug-in or a component in various types of applications, which is not specifically limited herein.

The editing trigger operation is a trigger operation used to implement background music editing, and the specific form of the editing trigger operation may comprise a plurality of forms, which may be selected according to the actual situation. The editing interface for the background music is an interface used to edit relevant information of background music, which may comprise a track list, tracks comprised in the track list are sequentially arranged. The specific arrangement direction of the tracks is not limited in this embodiment. The tracks can be arranged horizontally or vertically.

A length of the first track in the track list corresponds to the playback time period of the background music, a length of the second track corresponds to the associated time period of the music-associated material, and a number of the music-associated material is one or more. The first track of background music, also known as a sound track, can be used to represent the playback time period of the background music by means of a track length, that is, the length of the first track corresponds to the playback time period of the background music. The music-associated material may be an effect material that is displayed in association with the background music during the playback of the background music. For example, the music-associated material can comprise make-up, filters, etc. The number of the music-associated material is not limited, and can be set according to the actual situation. The second track of the music-associated material can be used to represent the associated time period of the music-associated material in the background music by means of a track length. Since the number of the music-associated material is one or more, the number of the second track may be one or more.

In an embodiment of the present disclosure, when a user needs to create an effect configuration file, a terminal can activate the production tool for the effect configuration file and monitor the user's operation. After receiving the user's editing trigger operation for background music, an editing interface for the background music can be displayed, and a track list comprising a first track and a second track can be displayed in the editing interface for the background music. In the current editing interface for the background music, different tracks may have the same length or different lengths.

In step 102, a playback time period of the background music is adjusted in response to an editing operation on the first track in the editing interface for the background music, and/or an associated time period corresponding to the music-associated material in the background music is adjusted in response to an editing operation on the second track in the editing interface for the background music.

The playback time period of the background music may be a time period determined from a complete playback time period of a currently selected background music. The associated time period corresponding to the music-associated material in the background music may be a time period corresponding to a display time of the music-associated material in the playback time period of the background music. The duration of the associated time period is less than or equal to the playback time period of the background music. For example, the associated time period may be an initial 10 seconds in the playback time period of the background music.

In an embodiment of the present disclosure, the adjusting of the playback time period of the background music in response to the editing operation on the first track in the editing interface for the background music comprises: in response to a first dragging operation on a track adjustment block of the first track in the editing interface for the background music, adjusting the length of the first track according to a dragging position of the first dragging operation, wherein an adjusted length of the first track is a length corresponding to a position to which the track adjustment block is dragged by the first dragging operation; and adjusting the playback time period of the background music according to the adjusted length of the first track.

The above track adjustment block may be movement-supporting boundary blocks provided at the boundaries of both sides of the track, which are used to represent a start boundary and an end boundary of the track. The length of the track is represented by a length between the two track adjustment blocks. Specifically, the first dragging operation on the track adjustment block of the first track by the user in the editing interface for the background music is received, and the length of the first track can be adjusted based on the dragging position of the first dragging operation. With the adjustment of the length of the first track the playback time period of the background music is adjusted accordingly. For example, when the length of the original playback time period of the background music is 10 minutes, and when the length of the first track is adjusted by half, the playback time is reduced to 5 minutes. The specific start time corresponds to a start boundary where the track adjustment block is located.

In an embodiment of the present disclosure, the adjusting of the associated time period corresponding to the music-associated material in the background music in response to the editing operation on the second track in the editing interface for the background music comprises: in response to a second dragging operation on a track adjustment block of the second track in the editing interface for the background music, adjusting the length of the second track according to a dragging position of the second dragging operation, wherein an adjusted length of the second track is a length corresponding to a position to which the track adjustment block is dragged by the second dragging operation; and adjusting the associated time period corresponding to the music-associated material in the background music according to the adjusted length of the second track.

the second dragging operation on the track adjustment block of the second track by the user in the editing interface for the background music is received, and the length of the second track can be adjusted according to the dragging position of the second dragging operation. With the adjustment of the length of the second track, the associated time period corresponding to the music-associated material in the background music is adjusted accordingly.

The above length adjustment of the first track and the second track by a dragging operation on a track adjustment block is only an example and not a sole limitation. For example, in an embodiment, the track length adjustment can also be achieved by a click operation on the track.

In the above solution, by adjusting a track length in the editing interface for the background music, the playback time period of the background music and/or the associated time period corresponding to the music-associated material in the background music can be quickly adjusted, thereby improving editing efficiency and saving editing time.

In step 103, the effect configuration file comprising the background music and the music-associated material is generated according to the first track and the second track in response to a generation instruction for the effect configuration file.

After editing the playback time period of the background music and/or the associated time period corresponding to the music-associated material in the background music, a generation instruction for the effect configuration file is received. Based on the edited and/or adjusted first and second tracks, the background music corresponding to the first track and the music-associated material corresponding to the second track can be packed using a packaging function provided by the production tool for the effect configuration file to generate and publish an effect configuration file. The effect configuration file can achieve the function set by the comprised background music and the music-associated material.

The effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

The original video refers to a video without the background music and the music-associated material added, and the target video is a video with the background music and the music-associated material added. The video in the embodiment of the present disclosure can be a video obtained by a combination of a static image and/or a dynamic image, or a video captured by a video capturing device, which is not specific limited here. The effect configuration file can be configured in an application program. When a user activates a function corresponding to the effect configuration file, an original video can be configured with an effect during the video shooting process to apply background music and a music-associated material to the original video to generate and output a target video. During the display process of the target video, the background music can be played according to the edited playback time period. When the background music is played up to the associated time period of the music-associated material, the music-associated material can be rendered and displayed.

In the solution for generating an effect configuration file provided in the embodiment of the present disclosure, a track list is displayed in an editing interface for background music in response to an editing trigger operation on the background music, wherein the track list comprises a first track of the background music and a second track of a music-associated material; a playback time period of the background music is adjusted in response to an editing operation on the first track in the editing interface for the background music, and/or an associated time period corresponding to the music-associated material in the background music is adjusted in response to an editing operation on the second track in the editing interface for the background music; and the effect configuration file comprising the background music and the music-associated material is generated according to the first track and the second track in response to a generation instruction for the effect configuration file, wherein the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material. In the above technical solution, through introducing editable tracks, editing of the playback time period of the background music and the associated time period corresponding to the music-associated material in the background music in the effect configuration file can be achieved, such that the effect configuration file with background music and the music-associated material added can be generated in a quick and convenient manner, thereby reducing the understanding cost, shortening the creation time, and improving the creation effect of the effect configuration file.

In some embodiments, the editing trigger operation on the background music comprises: receiving the editing trigger operation on the background music in response to detecting an adding operation on the background music or a selecting operation on a music layer corresponding to the background music in a layer list. Different layers in the layer list indicate different effect materials, and a rendering hierarchical order of effect materials of layers in the layer list is the same as an order of the layers in the layer list, an order position of the music layer in the layer list being a first position.

The layer is a functional layer provided in the above production tool for the effect configuration file for managing and editing the effect material. The layer list can comprise at least one layer. One layer is used to indicate an effect material, that is, the effect materials are in one-to-one correspondence with the layers. The effect material is the smallest element that is preset in the above production tool for the effect configuration file, and can be used to create an effect configuration file. Different effect materials have different functions. There is no limitation to the specific effect materials in embodiments of in the present disclosure. For example, the effect material comprises at least one of background music, make-up, filters, effects, stickers, text, etc. An effect configuration file can be composed of one effect material or a plurality of effect materials, which is not limited herein. The music layer is a layer used to manage and edit background music in an effect material.

Specifically, if the background music has not yet been added, when a user's adding operation on the background music on the home page of the production tool is received, which may specifically be a trigger operation on a button representing the background music on the home page is received, it can be determined that the editing trigger operation on the background music is received. Alternatively, if the background music has been added and the layer list comprises the music layer, when a selecting operation on the music layer in the layer list by the user is received, it can be determined that the editing trigger operation on the background music is received.

In the above solution, multiple trigger entries for editing the background music in the effect material can be set, thus improving the flexibility and efficiency of editing the background music and reducing the time, thereby enhancing the production experience.

In some embodiments, the method for generating the effect configuration file further comprises: displaying an effect identifier of the music-associated material at a position corresponding to the associated time period of the music-associated material on the first track of the background music in the editing interface for the background music. The position corresponding to the associated time period of the music-associated material can be determined according to the actual situation, which may be a position of any time point in the associated time period on the first track, comprising a start time point, an end time point, or any intermediate time point of the associated time period.

The effect identifier is a prompt identifier representing a music-associated material, which can prompt the user which music-associated material is in the current background music. Effect identifiers corresponding to different music-associated materials can be different. The expression form of the effect identifier is not limited. For example, a circle can be used as the effect identifier, and fill colors or sizes of the circles corresponding to different music-associated materials are different.

Specifically, if the current added background music has an associated music-associated material, an effect identifier of a target music-associated material can be displayed at a position corresponding to the associated time period of the music-associated material on the first track of the editing interface for the background music. Optionally, in response to a trigger operation on the effect identifier of the music-associated material, a second track of the music-associated material can be hidden or displayed.

In the above solution, a prompt identifier of a music-associated material that is in association with the background music can be displayed on the track of the background music, to enable the user to quickly understand the effect material following the current background music. Based on the prompt identifier, a corresponding second track can be hidden or displayed, making the editing of the music-associated material more efficient, and thereby further improving editing efficiency.

In some embodiments, the music-associated material is an effect material with a specified number of playback times, the associated time period of an initial state of the music-associated material is a time period corresponding to the playback times, and the length of the second track of the music-associated material only supports shortening.

the number of playback times is one of display states of the music-associated material. When the music-associated material is a dynamic image, the number of playback times can be specified. When the music-associated material is an effect material with a specified number of playback times, the associated time period of the initial state of the music-associated material is a time period of the playback times. That is, the length of the initial state of the second track of the music-associated material is a length corresponding to a duration of the number of playback times. In addition, the associated time period of the music-associated material does not support lengthening, but only supports reducing, that is, the length of the second track of the music-associated material only supports shortening. In the above solution, for a music-associated material with a fixed playback time period, only shortening is supported to avoid the impact of the material on other display states when it is displayed in the associated background music.

In some embodiments, the music-associated material is an effect material for which a trigger event is not set in an effect material other than the background music, the trigger event being one of display states corresponding to the effect material.

Due to mutual exclusion of background music and a trigger event in display states of the effect material, that is, because background music and those effect material cannot be set simultaneously, the music-associated material is an effect material for which a trigger event is not set in an effect material other than the background music, the trigger event being one of display states corresponding to the effect material. The trigger event comprises at least one of an appearance action, a disappearance action, or an initial state. The display states of an effect material are states of the effect material when it is rendered for display, which can comprise size, display position, display style, etc.

In some embodiments, the method for generating the effect configuration file further comprises: displaying a music editing component in the editing interface for the background music in response to a trigger operation on a music-associated button in an editing interface for any effect material other than the background music; and performing an editing operation corresponding to the music editing component on the background music in response to a trigger operation on the music editing component, the editing operation on the background music comprising at least one of a volume adjustment, a fade effect setting, a deletion operation or a replacement operation.

Any effect material other than background music may be a music-associated material or not. The music-associated button can be a function button used to trigger editing and setting background music in the editing interface for an effect material. The music-associated button can be comprised in the editing interface for any effect material other than background music.

The editing interface for the background music can also comprise one or more music editing components provided in advance for the background music, each music editing component corresponding to a different playback state. Optionally, the music editing components can comprise an adding music component, a volume component, a fade component, a deletion component, and a replacement component, etc. The adding music component can also be set up with multiple function buttons from different sources, and used for adding background music from different sources. For example, the adding music component can comprise function buttons for three sources: link download, music extracted from video and local music. The deletion component and the replacement component can be used to delete and replace the added background music, respectively. The volume component is used to implement editing of the volume of the background music, and the fade component is used to adjust the fade effect of the background music. By receiving a user's trigger operation on a music editing component, an editing operation corresponding to the music editing component can be performed on the background music. Thus, the playback state of the background music changes accordingly with the editing operation.

In the above solution, by a trigger operation in an editing interface for an effect material other than background music, multiple music editing components can be displayed in the editing interface for the background music, which can help the user to quickly and efficiently edit and adjust the playback states of the background music other than the above playback time period, thereby shortening the creation time, and improving the creation experience.

In some embodiments, the method for generating an effect configuration file further comprises: performing a playback control operation on the background music in response to a trigger operation on a playback control button for the background music, the playback control operation being a play operation or a pause operation. The playback control button can be a function button provided for the background music, and can be disposed on the music layer in the above layer list, or at another position related to the background music, which is not limited here.

After receiving a user's trigger operation on the playback control button for the background music, a play operation or a pause operation can be performed on the background music. That is, when the background music is playing, a pause operation can be performed on the background music; when the background music is not playing, a play operation can be performed on the background music. In the above solution, after adding background music, a play operation or a pause operation can be performed on the background music, which can help the user to preview the playback effect of the background music, thereby further improving the user's creation experience.

In some embodiments, the method for generating an effect configuration file further comprises: displaying a first effect material indicated by a first layer on an editing interface for the effect material in response to a selection operation on the first layer in the layer list, and adjusting a state of the first effect material according to an editing operation in response to the editing operation on the first effect material on the editing interface. Optionally, the adjusting of the state of the first effect material according to an editing operation in response to the editing operation on the first effect material on the editing interface comprises: in response to a trigger operation on an editing component corresponding to the first effect material on the editing interface, adjusting the state of the first effect material corresponding to the editing component, wherein the number of the editing component is at least one.

In the above solution, through providing the editing component corresponding to each effect material in the editing interface for the effect material, the statue of the effect material can be adjusted. The user can quickly and conveniently edit and set each effect material, thereby shortening the creation time and improving the creation efficiency and experience.

In some embodiments, the method for generating the effect configuration file further comprises: in response to an order adjustment operation on the layer list, adjusting the order of the layers in the layer list according to the order adjustment operation. In response to a dragging operation on a second layer in the layer list, the order of the second layer is adjusted according to a dragging position of the dragging operation, wherein an adjusted order of the second layer is a position in the layer list to which the second layer is dragged. In the above solution, a layer list is formed by implementing each effect material in the form of a layer, and the order of the layers in the layer list corresponds to the rendering hierarchical order of the effect materials. This allows the user to quickly adjust the rendering hierarchical order of the effect materials by adjusting the layer order, thereby improving the adjustment efficiency.

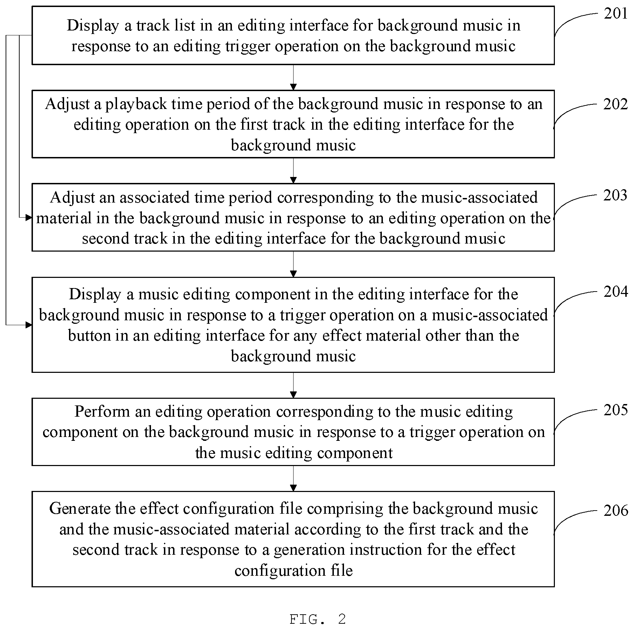

FIG. 2 is a flowchart of another method for generating an effect configuration file provided by an embodiment of the present disclosure. Based on the above embodiment, the method for generating the effect configuration file described above is further optimized in the embodiment. As shown in FIG. 2, the method comprises steps 201 to 206.

In step 201, a track list is displayed in an editing interface for the background music in response to an editing trigger operation on background music.

The track list comprises a first track of the background music and a second track of a music-associated material. A length of the first track in the track list corresponds to the playback time period of the background music, a length of the second track corresponds to the associated time period of the music-associated material, and a number of the music-associated material is one or more.

In some embodiments, the editing trigger operation on the background music comprises: receiving the editing trigger operation on the background music in response to detecting an adding operation on the background music or a selecting operation on a music layer corresponding to the background music in a layer list. Different layers in the layer list indicate different effect materials, and a rendering hierarchical order of effect materials of layers in the layer list is the same as an order of the layers in the layer list, an order position of the music layer in the layer list being a first position.

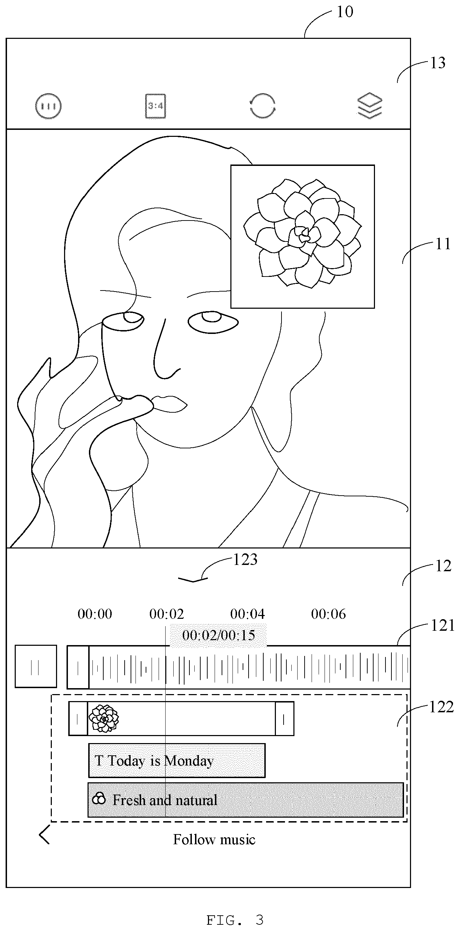

FIG. 3 is a schematic diagram of a first editing interface provided by an embodiment of the present disclosure. As shown in FIG. 3, an editing interface 10 for background music is displayed. The editing interface 10 comprises display areas 11, 12, and 13. A track list is displayed in the display area 12, the track list comprising a first track 121 for background music and an area 122 comprising a plurality of second tracks. Different second tracks indicate different music-associated materials. For example, three second tracks in the figure correspond, from top to bottom, to a sticker, text, and a "Fresh and Natural" filter, respectively. Different second tracks may have different fill colors. A state of the second track corresponding to a sticker in the figure is a selected state. The length of each track corresponds to a time period. The length of the first track corresponds to a playback time period, and the length of a second track corresponds to an associated time period of a music-associated material in the background music. The display area 11 can show an image in an original video and an added effect material (such as a sticker shown in the figure).

As shown in FIG. 3, a plurality of function buttons are shown in the display area 13 of the editing interface 10, comprising a layer button, a scale setting button, and a refresh button, etc., which are examples only.

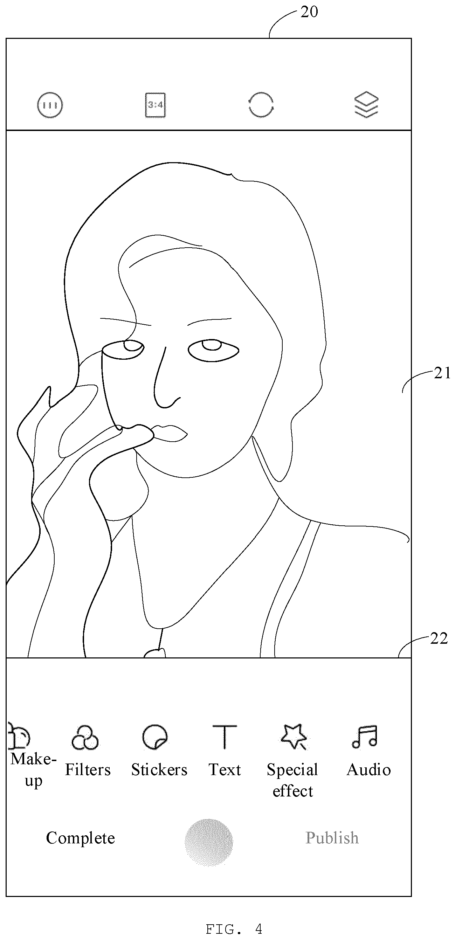

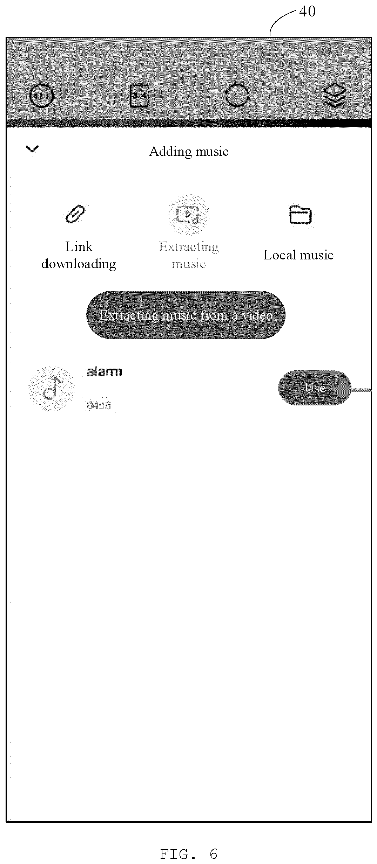

For example, FIG. 4 is a schematic diagram of a second editing interface provided by an embodiment of the present disclosure. As shown in FIG. 4, an editing interface 20 of an initial state of a production tool for an effect material is shown. The editing interface 20 comprises display areas 21 and 22. A plurality of effect materials, such as make-up, filters, stickers, text, effects, and audio in the figure, can be shown in the display area 22. When the effect material has not been added, and a user can perform adding and editing operations on the background music by triggering the "audio" control in the display area 22, then an editing interface 40 for the background music shown in FIG. 6 may be displayed. An image of a video can be displayed in the display area 21.

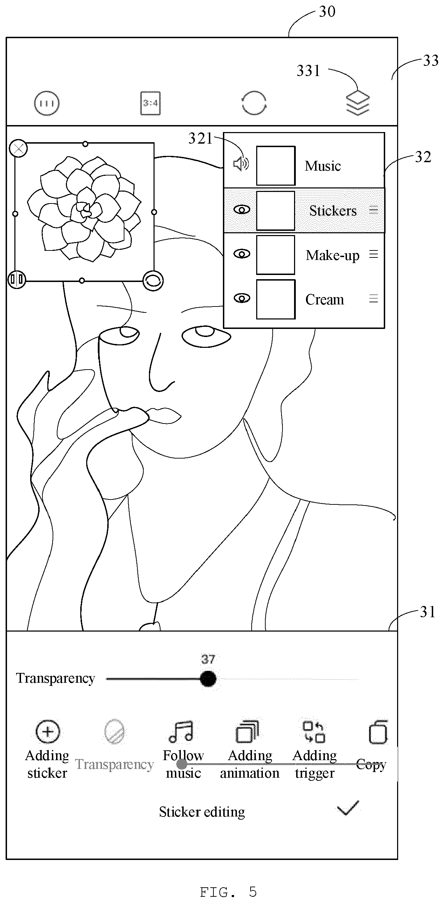

For example, FIG. 5 is a schematic diagram of a third editing interface provided by an embodiment of the present disclosure. As shown in FIG. 5, an editing interface 30 for an effect material other than the background music is displayed. A layer list 32 is displayed in the editing interface 30. The layer list 32 shows four vertically arranged layers, corresponding to effect materials such as background music, stickers, make-up, and a "cream" filter, respectively. After the user selects the sticker layer, the sticker layer is highlighted, and an editing component corresponding to the sticker is displayed in the display area 31. In addition, a transparency adjustment slider bar is also shown in FIG. 5. For example, as shown in FIG. 5, a current value of the transparency adjustment slider bar displayed on the interface is 37.

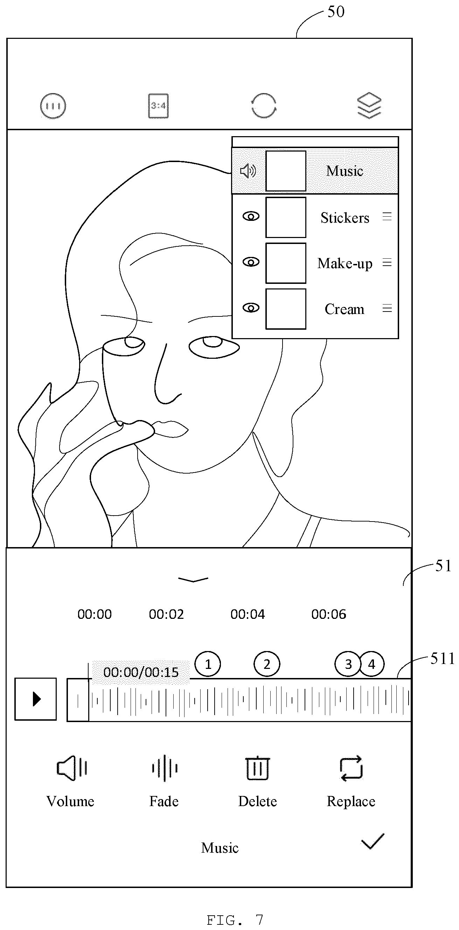

For example, FIG. 6 is a schematic diagram of a fourth editing interface provided by an embodiment of the present disclosure. As shown in FIG. 6, an editing interface 40 for the background music initially shown for adding background music is displayed. An adding music component can be shown in the editing interface 40 for the background music. The adding music component can also be set up with multiple function buttons from different sources, the multiple function buttons being used for adding background music from different sources. For example, FIG. 6 shows three sources of function buttons for link downloading, extracting music from a video and local music. In the figure, the button for extracting music from a video is triggered. After adding a music file of the background music from a source using a function button of the adding music component in FIG. 6, by clicking the "use" button in the figure, an editing interface 50 for the background music shown in FIG. 7 can be displayed.

For example, FIG. 7 is a schematic diagram of a fifth editing interface provided by an embodiment of the present disclosure. As shown in FIG. 7, the editing interface 50 for the background music for editing initially or historically added background music is displayed. In the case of historically added background music, that is, after a music layer has been added to the layer list 32 shown in FIG. 5, when a selection operation on the music layer is detected, the editing for the background music is triggered and the editing interface 50 for the background music shown in FIG. 7 is then displayed.

After step 201, steps 202, 203, and/or 204 to 205 can be performed.

In step 202, a playback time period of the background music is adjusted in response to an editing operation on a first track in the editing interface for the background music.

In an embodiment of the present disclosure, the adjusting of the playback time period of the background music in response to the editing operation on the first track in the editing interface for the background music comprises: in response to a first dragging operation on a track adjustment block of the first track in the editing interface for the background music, adjusting the length of the first track according to a dragging position of the first dragging operation, wherein an adjusted length of the first track is a length corresponding to a position to which the track adjustment block is dragged by the first dragging operation; and adjusting the playback time period of the background music according to the adjusted length of the first track.

In step 203, an associated time period corresponding to the music-associated material in the background music is adjusted in response to an editing operation on the second track in the editing interface for the background music.

In an embodiment of the present disclosure, the adjusting of the associated time period corresponding to the music-associated material in the background music in response to the editing operation on the second track in the editing interface for the background music comprises: in response to a second dragging operation on a track adjustment block of the second track in the editing interface for the background music, adjusting the length of the second track according to a dragging position of the second dragging operation, wherein an adjusted length of the second track is a length corresponding to a position to which the track adjustment block is dragged by the second dragging operation; and adjusting the associated time period corresponding to the music-associated material in the background music according to the adjusted length of the second track.

As shown in FIG. 3, by dragging the track adjustment block of the first track 121 in the editing interface 10, the user can implement the lengthening or shortening of the length of the first track 121, and thus implement the adjustment of the playback time period of the background music; and/or by dragging the track adjustment block of any one of the second tracks in the editing interface 10, the user can implement the lengthening or shortening of the length of the second track, and thus implement an adjustment of the associated time period corresponding to the music-associated material in the background music. As shown in FIG. 3, a second track corresponding to a sticker has been selected. The length of the track can be adjusted by moving the track adjustment blocks on the left and right sides of the track. The longest length of each second track is the same as the length of the first track.

Optionally, by clicking on a track control button 123 in FIG. 3, the area 122 comprising multiple second tracks can be hidden or displayed. If the area 122 is currently displayed, triggering the track control button 123 can hide the area 122; if the area 122 is not currently displayed, triggering the track control button 123 can display the area 122.

Optionally, the method for generating the effect configuration file in an embodiment of the present disclosure may further comprise: displaying an effect identifier of the music-associated material at a position corresponding to the associated time period of the music-associated material on the first track of the background music in the editing interface for the background music.

As shown in FIG. 7, a first track 511 is displayed in the display area 51 of the editing interface 50. The first track 511 exemplarily shows effect identifiers of four music-associated materials that are currently associated with the background music, such as four circles filled with numbers 1, 2, 3, and 4, respectively, as shown in the figure, to indicate the different music-associated materials by the numbers. The effect identifiers in the figure are only an example, and different music-associated materials can be distinguished by different fill colors, shapes, etc.

Optionally, the music-associated material is an effect material with a specified number of playback times, the associated time period of an initial state of the music-associated material is a time period corresponding to the playback times, and the length of the second track of the music-associated material only supports shortening.

Optionally, the music-associated material is an effect material for which a trigger event is not set in an effect material other than the background music, the trigger event being one of display states corresponding to the effect material.

In step 204, a music editing component is displayed in the editing interface for the background music in response to a trigger operation on a music-associated button in an editing interface for any effect material other than the background music.

Referring to FIG. 5, an editing operation on the background music may be triggered by a user trigger operation on a " follow music" button of the music-associated button in the display area 31. Thereafter, an editing interface 50 for the background music shown in FIG. 7 can be displayed.

As shown in FIG. 5, a plurality of editing components are also shown in the display area 31, such as adding sticker, transparency, adding animation, adding trigger and copy, etc. The user can adjust the state of the sticker by a trigger operation on an editing component of a sticker. In addition, in the editing interface 30, the appearance of the sticker changes as it is edited. Functional buttons can also be placed around the sticker, for just example a deletion button in the upper left corner of the sticker, a mirror button in the lower left corner of the sticker and a refresh button in the lower right corner of the sticker. As shown in FIG. 5, a layer button 331 is displayed in the display area 33 of the editing interface 30. The user can display or hide the layer list by triggering the layer button 331. In addition, other function buttons are also shown in the display area 13, such as the scale setting button and the refresh button in the figure, which are shown as examples only.

In step 205, an editing operation corresponding to the music editing component on the background music is performed in response to a trigger operation on the music editing component.

The editing operation comprises at least one of a volume adjustment, a fade effect setting, a deletion operation or a replacement operation.

Referring to FIG. 7, a plurality of volume editing components are shown in the display area 51 in the editing interface 50, comprising a volume component, a fade component, a deletion component, and a replacement component. By triggering the above components, the user can implement editing of the playback status such as volume adjustment, setting of the fade effect, deletion and replacement of the background music, respectively.

In step 206, the effect configuration file comprising the background music and the music-associated material is generated according to the first track and the second track in response to a generation instruction for the effect configuration file.

Step 206 can be performed after step 202, step 203, or step 205.

The effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

Optionally, the method for generating the effect configuration file in an embodiment of the present disclosure may further comprise: performing a playback control operation on the background music in response to a trigger operation on a playback control button for the background music, the playback control operation being a play operation or a pause operation. As shown in FIG. 5, by triggering the playback control button 321 of the music layer in layer list 32, the play or pause control of the background music can be achieved.

In the solution, the experience of creating an effect configuration file can be optimized. By introducing the concept of layers, it is convenient to manage creation materials, reduce understanding costs, shorten creation time, and to some extent stimulate an increase in the production of effect configuration files. It can also enhance the ability of creation tools to create the effect configuration file that can be used to apply background music.

In the solution for generating an effect configuration file provided in the embodiment of the present disclosure, a track list is displayed in an editing interface for background music in response to an editing trigger operation on the background music, wherein the track list comprises a first track of the background music and a second track of a music-associated material; a playback time period of the background music is adjusted in response to an editing operation on the first track in the editing interface for the background music, and/or an associated time period corresponding to the music-associated material in the background music is adjusted in response to an editing operation on the second track in the editing interface for the background music; and the effect configuration file comprising the background music and the music-associated material is generated according to the first track and the second track in response to a generation instruction for the effect configuration file, wherein the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material. In the above technical solution, through introducing editable tracks, editing of the playback time period of the background music and the associated time period corresponding to the music-associated material in the background music in the effect configuration file can be achieved, such that the effect configuration file with background music and the music-associated material added can be generated in a quick and convenient manner, thereby reducing the understanding cost, shortening the creation time, and improving the creation effect of the effect configuration file.

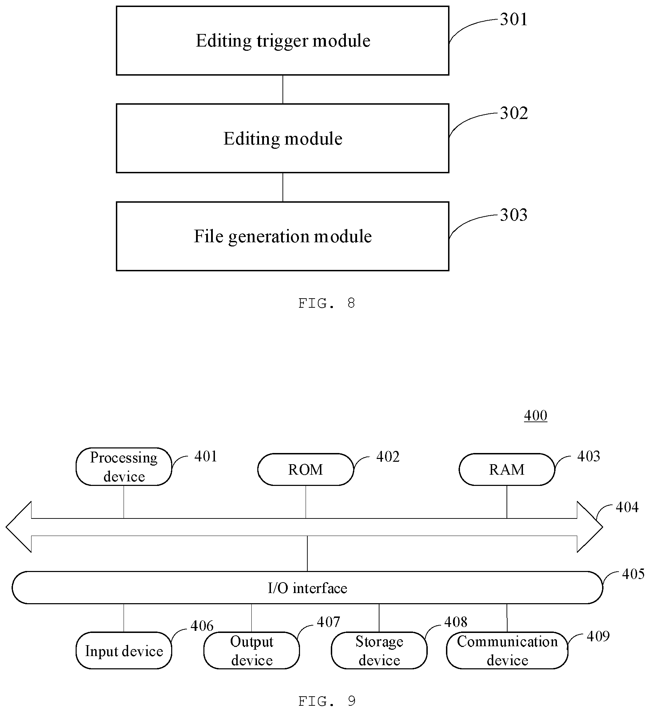

FIG. 8 is a schematic structural diagram of an apparatus for generating an effect configuration file provided in an embodiment of the present disclosure. The apparatus can be implemented by software and/or hardware, and can generally be integrated into an electronic device. As shown in FIG. 8, the apparatus comprises: an editing trigger module 301, an editing module 302 and a file generation module 303.

The editing trigger module 301 is configured to display a track list in an editing interface for background music in response to an editing trigger operation on the background music, wherein the track list comprises a first track of the background music and a second track of a music-associated material.

The editing module 302 is configured to adjust a playback time period of the background music in response to an editing operation on the first track in the editing interface for the background music, and/or adjust an associated time period corresponding to the music-associated material in the background music in response to an editing operation on the second track in the editing interface for the background music.

The file generation module 303 is configured to generate the effect configuration file comprising the background music and the music-associated material according to the first track and the second track in response to a generation instruction for the effect configuration file.

The effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

Optionally, a length of the first track in the track list corresponds to the playback time period of the background music, a length of the second track corresponds to the associated time period of the music-associated material, and a number of the music-associated material is one or more.

Optionally, the editing module 302 is configured to: in response to a first dragging operation on a track adjustment block of the first track in the editing interface for the background music, adjust the length of the first track according to a dragging position of the first dragging operation, wherein an adjusted length of the first track is a length corresponding to a position to which the track adjustment block is dragged by the first dragging operation; and adjust the playback time period of the background music according to the adjusted length of the first track.

Optionally, the editing module 302 is configured to: in response to a second dragging operation on a track adjustment block of the second track in the editing interface for the background music, adjust the length of the second track according to a dragging position of the second dragging operation, wherein an adjusted length of the second track is a length corresponding to a position to which the track adjustment block is dragged by the second dragging operation; and adjust the associated time period corresponding to the music-associated material in the background music according to the adjusted length of the second track.

Optionally, the apparatus further comprises an identification module configured to display an effect identifier of the music-associated material at a position corresponding to the associated time period of the music-associated material on the first track of the background music in the editing interface for the background music.

Optionally, the music-associated material is an effect material with a specified number of playback times, the associated time period of an initial state of the music-associated material is a time period corresponding to the playback times, and the length of the second track of the music-associated material only supports shortening.

Optionally, the music-associated material is an effect material for which a trigger event is not set in an effect material other than the background music, the trigger event being one of display states corresponding to the effect material.

Optionally, the editing trigger module is configured to receive the editing trigger operation on the background music in response to detecting an adding operation on the background music or a selecting operation on a music layer corresponding to the background music in a layer list.

Optionally, different layers in the layer list indicate different effect materials, and a rendering hierarchical order of effect materials of layers in the layer list is the same as an order of the layers in the layer list, an order position of the music layer in the layer list being a first position.

Optionally, the apparatus further comprises an editing component module configured to display a music editing component in the editing interface for the background music in response to a trigger operation on a music-associated button in an editing interface for any effect material other than the background music; and perform an editing operation corresponding to the music editing component on the background music in response to a trigger operation on the music editing component, the editing operation comprising at least one of a volume adjustment, a fade effect setting, a deletion operation or a replacement operation.

Optionally, the apparatus further comprises a playback control module configured to perform a playback control operation on the background music in response to a trigger operation on a playback control button for the background music, the playback control operation being a play operation or a pause operation.

An embodiment of the present application also provides a computer program product comprising a computer program/instructions that, when executed by a processor, implement the method for generating an effect configuration file provided in any embodiment of the present disclosure.

FIG. 9 is a schematic structural diagram of an electronic device provided in an embodiment of the present disclosure. Referring to FIG. 9, a schematic structural diagram of an electronic device 400 suitable for implementing embodiments of the present disclosure is shown. The electronic device 400 in the embodiment of the present disclosure may comprise, but not limited to, a mobile terminal such as a mobile phone, a notebook computer, a digital broadcast receiver, a PDA (Personal Digital Assistant), a PAD (tablet computer), a PMP (Portable Multimedia Player), an on-board terminal (such as an on-board navigation terminal), and a fixed terminal such as a digital TV, a desktop computer, and the like. The electronic device shown in FIG. 9 is merely an example and should not impose any limitation on the function and scope of use of the embodiments of the present disclosure.

As shown in FIG. 9, the electronic device 400 may comprise a processing device (e.g., a central processing unit, a graphics processor) 401, which may perform various appropriate actions and processes according to a program stored in Read Only Memory (ROM) 402 or a program loaded from storage device 408 into Random Access Memory (RAM) 403. In RAM 403, various programs and data required for the operation of the electronic device 400 are also stored. Processing device 401, ROM 402 and R_AM 403 are connected to each other through bus 404. An input/output (I/O) interface 405 is also connected to the bus 404.

Generally, the following devices can be connected to I/O interface 405: an input device 406 comprising, for example, a touch screen, a touch pad, a keyboard, a mouse, a camera, a microphone, an accelerometer, a gyroscope, etc; an output device 407 comprising a liquid crystal display (LCD), a speaker, a vibrator, etc.; a storage device 408 such as a magnetic tape, a hard disk, etc; and a communication device 409. The communication device 409 enables the electronic device 400 to communicate wirelessly or wired with other devices to exchange data. Although FIG. 9 shows the electronic device 400 with various components, it should be understood that it is not required to implement or have all of these components. Alternatively, more or fewer components can be implemented or provided.

In particular, according to an embodiment of the present disclosure, the processes described above with reference to the flowchart can be implemented as a computer software program. For example, an embodiment of the present disclosure comprises a computer program product, which comprises a computer program carried on a non-transitory computer readable medium, and containing program code for executing the method shown in the flowchart. In such an embodiment, the computer program may be downloaded and installed from the network through the communication device 409, or installed from the storage device 408, or from the ROM 402. When the computer program is executed by the processing device 401, the above functions defined in the method for generating an effect configuration file in the embodiment of the present disclosure are performed.

It should be noted that the computer-readable medium in the present disclosure may be a computer-readable signal medium or a computer-readable storage medium, or any combination of thereof. The computer readable storage medium can be, for example, but not limited to, an electronic, magnetic, optical, electromagnetic, infrared, or semiconductor system, apparatus, or device, or any combination of the above. More specific examples of the computer readable storage medium may comprise, but are not limited to: electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing. In the present disclosure, a computer readable storage medium can be any tangible medium that can contain or store a program, which can be used by or in connection with an instruction execution system, apparatus or device. In the present disclosure, a computer readable signal medium may comprise a data signal that is propagated in the baseband or as part of a carrier, carrying computer readable program code. Such propagated data signals can take a variety of forms comprising, but not limited to, electromagnetic signals, optical signals, or any suitable combination of the foregoing. The computer readable signal medium can also be any computer readable medium other than a computer readable storage medium, which can transmit, propagate, or transport a program for use by or in connection with the instruction execution system, apparatus, or device. Program code embodied on a computer readable medium can be transmitted by any suitable medium, comprising but not limited to wire, fiber optic cable, RF (radio frequency), etc., or any suitable combination of the foregoing.

In some embodiments, a client and a server can communicate using any currently known or future developed network protocol such as HTTP (HyperText Transfer Protocol), and can be interconnected by any form or medium of digital data communication, e.g., a communication network. Examples of communication networks comprise a local area network ("LAN") and a wide area network ("WAN"), the Internet, and end-to-end networks (for example, ad hoc end-to-end networks), as well as any currently known or future developed networks.

The above computer-readable medium may be comprised in the electronic device described above; or it may exist alone without being assembled into the electronic device.

The computer-readable medium carries one or more programs that, when executed by the electronic device, cause the electronic device to: display a track list in an editing interface for background music in response to an editing trigger operation on the background music, wherein the track list comprises a first track of the background music and a second track of a music-associated material; adjust a playback time period of the background music in response to an editing operation on the first track in the editing interface for the background music, and/or adjust an associated time period corresponding to the music-associated material in the background music in response to an editing operation on the second track in the editing interface for the background music; and generate the effect configuration file comprising the background music and the music-associated material according to the first track and the second track in response to a generation instruction for the effect configuration file, wherein the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

The computer program code for executing operations of the present disclosure may be written by one or more program design languages or combinations thereof. The program design languages comprise, but are not limited to, object-oriented program design languages, such as Java, Smalltalk, C++, etc, as well as conventional procedural program design languages, such as "C" program design language or similar program design language. A program code may be completely or partly executed on a user computer, or executed as an independent software package, partly executed on the user computer and partly executed on a remote computer, or completely executed on a remote computer or server. In the circumstance involving the remote computer, the remote computer may be connected to the user computer through various kinds of networks, comprising local area network (LAN) or wide area network (WAN), or connected to external computer (for example using an internet service provider via Internet).

The flowcharts and block diagrams in the accompanying drawings illustrate the architecture, functionality, and operation of systems, methods, and computer program products that may be implemented in accordance with various embodiments of the present disclosure. In this regard, each block in the flowchart or block diagrams may represent a module, segment, or portion of code, which comprises one or more executable instructions for implementing the specified logical functions. It should also be noted that, in some alternative implementations, the functions noted in the block may occur out of the order noted in the FIG.s. For example, two blocks shown in succession may be executed substantially in parallel, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments described in the present disclosure can be implemented in software or hardware. Wherein, the names of the units do not constitute a limitation on the units themselves under certain circumstances.

The functions described above may be performed at least in part by one or more hardware logic components. For example, without limitation, exemplary types of hardware logic components that can be used comprise: Field Programmable Gate Array (FPGA), Application Specific Integrated Circuit (ASIC), Application Specific Standard Product (ASSP), System on Chip (SOC), Complex Programmable Logic Device (CPLD), etc.

In the context of the present disclosure, a machine-readable medium may be a tangible medium, which may contain or store a program for use by or in connection with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combination of thereof. More specific examples of the machine-readable storage medium may comprise electrical connection with one or more wires, portable computer disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing.

According to one or more embodiments of the present disclosure, the present disclosure provides a method for generating an effect configuration file, comprising: displaying a track list in an editing interface for background music in response to an editing trigger operation on the background music, wherein the track list comprises a first track of the background music and a second track of a music-associated material; adjusting a playback time period of the background music in response to an editing operation on the first track in the editing interface for the background music, and/or adjusting an associated time period corresponding to the music-associated material in the background music in response to an editing operation on the second track in the editing interface for the background music; and generating the effect configuration file comprising the background music and the music-associated material according to the first track and the second track in response to a generation instruction for the effect configuration file, wherein the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

According to one or more embodiments of the present disclosure, in the method for generating an effect configuration file provided in the present disclosure, a length of the first track in the track list corresponds to the playback time period of the background music, a length of the second track corresponds to the associated time period of the music-associated material, and a number of the music-associated material is one or more.

According to one or more embodiments of the present disclosure, in the method for generating an effect configuration file provided in the present disclosure, the adjusting of the playback time period of the background music in response to the editing operation on the first track in the editing interface for the background music comprises: in response to a first dragging operation on a track adjustment block of the first track in the editing interface for the background music, adjusting the length of the first track according to a dragging position of the first dragging operation, wherein an adjusted length of the first track is a length corresponding to a position to which the track adjustment block is dragged by the first dragging operation; and adjusting the playback time period of the background music according to the adjusted length of the first track.

According to one or more embodiments of the present disclosure, in the method for generating an effect configuration file provided in the present disclosure, the adjusting of the associated time period corresponding to the music-associated material in the background music in response to the editing operation on the second track in the editing interface for the background music comprises: in response to a second dragging operation on a track adjustment block of the second track in the editing interface for the background music, adjusting the length of the second track according to a dragging position of the second dragging operation, wherein an adjusted length of the second track is a length corresponding to a position to which the track adjustment block is dragged by the second dragging operation; and adjusting the associated time period corresponding to the music-associated material in the background music according to the adjusted length of the second track.

According to one or more embodiments of the present disclosure, the method for generating an effect configuration file provided in the present disclosure further comprises: displaying an effect identifier of the music-associated material at a position corresponding to the associated time period of the music-associated material on the first track of the background music in the editing interface for the background music.

According to one or more embodiments of the present disclosure, in the method for generating an effect configuration file provided in the present disclosure, the music-associated material is an effect material with a specified number of playback times, the associated time period of an initial state of the music-associated material is a time period corresponding to the playback times, and the length of the second track of the music-associated material only supports shortening.

According to one or more embodiments of the present disclosure, in the method for generating an effect configuration file provided in the present disclosure, the music-associated material is an effect material for which a trigger event is not set in an effect material other than the background music, the trigger event being one of display states corresponding to the effect material.

According to one or more embodiments of the present disclosure, in the method for generating an effect configuration file provided in the present disclosure, the editing trigger operation on the background music comprises: receiving the editing trigger operation on the background music in response to detecting an adding operation on the background music or a selecting operation on a music layer corresponding to the background music in a layer list.

According to one or more embodiments of the present disclosure, in the method for generating an effect configuration file provided in the present disclosure, different layers in the layer list indicate different effect materials, and a rendering hierarchical order of effect materials of layers in the layer list is the same as an order of the layers in the layer list, an order position of the music layer in the layer list being a first position.

According to one or more embodiments of the present disclosure, the method for generating an effect configuration file provided in the present disclosure further comprises: displaying a music editing component in the editing interface for the background music in response to a trigger operation on a music-associated button in an editing interface for any effect material other than the background music; and performing an editing operation corresponding to the music editing component on the background music in response to a trigger operation on the music editing component, the editing operation on the background music comprising at least one of a volume adjustment, a fade effect setting, a deletion operation or a replacement operation.

According to one or more embodiments of the present disclosure, the method for generating an effect configuration file provided in the present disclosure further comprises: performing a playback control operation on the background music in response to a trigger operation on a playback control button for the background music, the playback control operation being a play operation or a pause operation.

According to one or more embodiments of the present disclosure, the present disclosure provides an apparatus for generating an effect configuration file, comprising: an editing trigger module configured to display a track list in an editing interface for background music in response to an editing trigger operation on the background music, wherein the track list comprises a first track of the background music and a second track of a music-associated material; an editing module configured to adjust a playback time period of the background music in response to an editing operation on the first track in the editing interface for the background music, and/or adjust an associated time period corresponding to the music-associated material in the background music in response to an editing operation on the second track in the editing interface for the background music; and a file generation module configured to generate the effect configuration file comprising the background music and the music-associated material according to the first track and the second track in response to a generation instruction for the effect configuration file, wherein the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

According to one or more embodiments of the present disclosure, in the apparatus for generating an effect configuration file provided in the present disclosure, a length of the first track in the track list corresponds to the playback time period of the background music, a length of the second track corresponds to the associated time period of the music-associated material, and a number of the music-associated material is one or more.

According to one or more embodiments of the present disclosure, in the apparatus for generating an effect configuration file provided in the present disclosure, the editing module is configured to: in response to a first dragging operation on a track adjustment block of the first track in the editing interface for the background music, adjust the length of the first track according to a dragging position of the first dragging operation, wherein an adjusted length of the first track is a length corresponding to a position to which the track adjustment block is dragged by the first dragging operation; and adjust the playback time period of the background music according to the adjusted length of the first track.

According to one or more embodiments of the present disclosure, in the apparatus for generating an effect configuration file provided in the present disclosure, the editing module is configured to: in response to a second dragging operation on a track adjustment block of the second track in the editing interface for the background music, adjust the length of the second track according to a dragging position of the second dragging operation, wherein an adjusted length of the second track is a length corresponding to a position to which the track adjustment block is dragged by the second dragging operation; and adjust the associated time period corresponding to the music-associated material in the background music according to the adjusted length of the second track.

According to one or more embodiments of the present disclosure, in the apparatus for generating an effect configuration file provided in the present disclosure, the apparatus further comprises an identification module configured to display an effect identifier of the music-associated material at a position corresponding to the associated time period of the music-associated material on the first track of the background music in the editing interface for the background music.

According to one or more embodiments of the present disclosure, in the apparatus for generating an effect configuration file provided in the present disclosure, the music-associated material is an effect material with a specified number of playback times, the associated time period of an initial state of the music-associated material is a time period corresponding to the playback times, and the length of the second track of the music-associated material only supports shortening.

According to one or more embodiments of the present disclosure, in the apparatus for generating an effect configuration file provided in the present disclosure, the music-associated material is an effect material for which a trigger event is not set in an effect material other than the background music, the trigger event being one of display states corresponding to the effect material.

According to one or more embodiments of the present disclosure, in the apparatus for generating an effect configuration file provided in the present disclosure, the editing trigger module is configured to: receive the editing trigger operation on the background music in response to detecting an adding operation on the background music or a selecting operation on a music layer corresponding to the background music in a layer list.

According to one or more embodiments of the present disclosure, in the apparatus for generating an effect configuration file provided in the present disclosure, different layers in the layer list indicate different effect materials, and a rendering hierarchical order of effect materials of layers in the layer list is the same as an order of the layers in the layer list, an order position of the music layer in the layer list being a first position.

According to one or more embodiments of the present disclosure, in the apparatus for generating an effect configuration file provided in the present disclosure, the apparatus further comprises an editing component module configured to: display a music editing component in the editing interface for the background music in response to a trigger operation on a music-associated button in an editing interface for any effect material other than the background music; and perform an editing operation corresponding to the music editing component on the background music in response to a trigger operation on the music editing component, the editing operation on the background music comprising at least one of a volume adjustment, a fade effect setting, a deletion operation or a replacement operation.

According to one or more embodiments of the present disclosure, in the apparatus for generating an effect configuration file provided in the present disclosure, the apparatus further comprises a playback control module configured to perform a playback control operation on the background music in response to a trigger operation on a playback control button for the background music, the playback control operation being a play operation or a pause operation.

According to one or more embodiments of the present disclosure, the present disclosure provides an electronic device, comprising: a processor; a memory configured store executable instructions for the processor; wherein the processor is configured to read the executable instructions from the memory and execute the executable instructions to implement the method for generating the effect configuration file provided in any embodiment of the present disclosure.

According to one or more embodiments of the present disclosure, the present disclosure provides a computer-readable storage medium on which a computer program is stored, wherein the computer program is configured to perform the method for generating the effect configuration file provided in any embodiments of the present disclosure.

According to one or more embodiments of the present disclosure, the present disclosure provides a computer program, comprising: instructions that, when executed by a processor, cause the processor to perform the method for generating the effect configuration file provided in any embodiment of the present disclosure.

According to one or more embodiments of the present disclosure, the present disclosure provides a computer program product comprising instructions that, when executed by a processor, cause the processor to perform the method for generating the effect configuration file provided in any embodiment of the present disclosure.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the disclosed concept, for example, technical solutions formed by replacing the above features with technical features having similar functions to (but not limited to) those disclosed in the present disclosure.

In addition, although the operations are depicted in a specific order, this should not be understood as requiring these operations to be performed in the specific order shown or performed in a sequential order. Under certain circumstances, multitasking and parallel processing may be advantageous. Likewise, although several specific implementation details are comprised in the above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable subcombination.

Although the subject matter has been described in language specific to structural features and/or logical actions of the method, it should be understood that the subject matter defined in the appended claims is not necessarily limited to the specific features or actions described above. On the contrary, the specific features and actions described above are merely exemplary forms of implementing the claims.

## Claims

1. A method for generating an effect configuration file, comprising:
displaying a track list in an editing interface for background music in response to an editing trigger operation on the background music, wherein the track list comprises a first track of the background music and a second track of a music-associated material;
adjusting a playback time period of the background music in response to an editing operation on the first track in the editing interface for the background music, and/or adjusting an associated time period corresponding to the music-associated material in the background music in response to an editing operation on the second track in the editing interface for the background music; and
generating the effect configuration file according to the first track and the second track in response to a generation instruction for the effect configuration file,
wherein the effect configuration file comprises the background music and the music-associated material, the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

2. The method according to claim 1, wherein a length of the first track in the track list corresponds to the playback time period of the background music, a length of the second track corresponds to the associated time period of the music-associated material, and a number of the music-associated material is one or more.

3. The method according to claim 2, wherein the adjusting of the playback time period of the background music in response to the editing operation on the first track in the editing interface for the background music comprises:
in response to a first dragging operation on a track adjustment block of the first track in the editing interface for the background music, adjusting the length of the first track according to a dragging position of the first dragging operation, wherein an adjusted length of the first track is a length corresponding to a position to which the track adjustment block is dragged by the first dragging operation; and
adjusting the playback time period of the background music according to the adjusted length of the first track.

4. The method according to claim 2, wherein the adjusting of the associated time period corresponding to the music-associated material in the background music in response to the editing operation on the second track in the editing interface for the background music comprises:
in response to a second dragging operation on a track adjustment block of the second track in the editing interface for the background music, adjusting the length of the second track according to a dragging position of the second dragging operation, wherein an adjusted length of the second track is a length corresponding to a position to which the track adjustment block is dragged by the second dragging operation; and
adjusting the associated time period corresponding to the music-associated material in the background music according to the adjusted length of the second track.

5. The method according to claim 1, further comprising:
displaying an effect identifier of the music-associated material at a position corresponding to the associated time period of the music-associated material on the first track of the background music in the editing interface for the background music.

6. The method according to claim 1, wherein the music-associated material is an effect material with a specified number of playback times, the associated time period of an initial state of the music-associated material is a time period corresponding to the playback times, and the length of the second track of the music-associated material only supports shortening.

7. The method according to claim 1, wherein the music-associated material is an effect material for which a trigger event is not set in an effect material other than the background music, the trigger event being one of display states corresponding to the effect material.

8. The method according to claim 1, wherein the editing trigger operation on the background music comprises:
receiving the editing trigger operation on the background music in response to detecting an adding operation on the background music or a selecting operation on a music layer corresponding to the background music in a layer list.

9. The method according to claim 8, wherein different layers in the layer list indicate different effect materials, and a rendering hierarchical order of effect materials of layers in the layer list is the same as an order of the layers in the layer list, an order position of the music layer in the layer list being a first position.

10. The method according to claim 1, further comprising:
displaying a music editing component in the editing interface for the background music in response to a trigger operation on a music-associated button in an editing interface for any effect material other than the background music; and
performing an editing operation corresponding to the music editing component on the background music in response to a trigger operation on the music editing component, the editing operation on the background music comprising at least one of a volume adjustment, a fade effect setting, a deletion operation or a replacement operation.

11. The method according to claim 1, further comprising:
performing a playback control operation on the background music in response to a trigger operation on a playback control button for the background music, the playback control operation being a play operation or a pause operation.

12. An apparatus for generating an effect configuration file, comprising:
an editing trigger module configured to display a track list in an editing interface for background music in response to an editing trigger operation on the background music, wherein the track list comprises a first track of the background music and a second track of a music-associated material;
an editing module configured to adjust a playback time period of the background music in response to an editing operation on the first track in the editing interface for the background music, and/or adjust an associated time period corresponding to the music-associated material in the background music in response to an editing operation on the second track in the editing interface for the background music; and
a file generation module configured to generate the effect configuration file according to the first track and the second track in response to a generation instruction for the effect configuration file,
wherein the effect configuration file comprises the background music and the music-associated material, the effect configuration file is applied to configure an effect on an original video during a video shooting process, to apply the background music and the music-associated material to the original video to generate a target video as a shooting output; and in a display process of the target video, the background music is played according to the playback time period, and the music-associated material is rendered and displayed when the background music is played up to the associated time period of the music-associated material.

13. An electronic device, comprising:
a processor; and
a memory configured store executable instructions for the processor;
wherein the processor is configured to read the executable instructions from the memory and execute the executable instructions to implement the method for generating the effect configuration file according to any one of claims 1 to 11.

14. A computer-readable storage medium on which a computer program is stored, wherein the computer program is configured to perform the method for generating the effect configuration file according to any one of claims 1 to 11.

15. A computer program, comprising:
instructions that, when executed by a processor, cause the processor to perform the method for generating the effect configuration file according to any one of claims 1 to 11.

16. A computer program product comprising instructions that, when executed by a processor, cause the processor to perform the method for generating the effect configuration file according to any one of claims 1 to 11.
